# EUROPEAN PATENT SPECIFICATION

(11) **EP 0 550 213 B1**
(45) Date of publication and mention of the grant of the patent: **11.03.1998**
(21) Application number: 92311483.9
(22) Date of filing: 16.12.1992
(51) Int. Cl.: H04N 9/83, H04N 9/79

(54) **Recording and reproduction of colour video signals**
Aufnahme und Wiedergabe von Farbvideosignalen
Enregistrement et reproduction de signaux vidéo en couleur

(30) Priority: 16.12.1991 JP 332118/91
(43) Date of publication of application: 07.07.1993
(73) Proprietor: SONY CORPORATION, Tokyo (JP)
(72) Inventor: Honda, Takashi, c/o Patents Division, Shinagawa-ku, Tokyo 141 (JP); Sato, Dai, c/o Patents Division, Shinagawa-ku, Tokyo 141 (JP)
(74) Representative: Harris, Ian Richard

(56) References cited:
- EP-A- 0 286 157
- US-A- 4 692 801
- US-A- 4 772 961
- US-A- 5 043 798
- IEICE TRANSACTIONS vol. E-72, no. 4, 30 April 1989, TOKYO JP pages 324 - 325 , XP000046974 M. KOBAYASHI ET AL 'Chrominance Bandwidth Expansion of Color-under VCR'

## Description

This invention relates to recording and reproduction of video signals. In one aspect, the invention relates to video signal recording apparatus, for use in a video tape recorder (VTR) for example, for down-converting and recording a chroma component of a video signal.

In VTRs for domestic use, a chroma component included in a video signal is down-converted and the down-converted chroma signal is recorded together with a frequency-modulated (FM) luminance signal. Here, the chroma signal is down-converted into a chroma signal having a frequency of, for example, 700 kHz, and the bandwidth of this down-converted chroma signal lies in a range of about ± 400 to 500 kHz. The down-converted chroma signal having a relatively narrow band is recorded on video tape together with the frequency-modulated luminance signal, whereby the video signal can be efficiently recorded on the video tape and a video system suitable for home use in which the amount of tape consumed is limited can be constructed.

However, when the chroma signal is down-converted and then recorded on the video tape, there is the disadvantage that the chroma component of the reproduced signal is deteriorated. That is, since the bandwidth of the chroma signal is reduced prior to recording by the down-conversion processing, it is difficult to restore the bandwidth of the original chroma signal. Therefore, as compared with the recorded frequency modulated luminance signal, the chroma signal has very poor characteristics.

In the reproduced picture, the characteristics of the luminance signal are apparently dominant, and the frequency characteristics of luminance signals have been improved (high band) recently in order to improve the picture quality. In order to improve the picture quality further, it is desirable to improve the characteristics of the chroma signal (ie, to improve colour reproducibility).

To improve the chroma signal characteristics, it has been proposed to shift a down-converting carrier of about 700 kHz to a slightly higher frequency by shifting the converting frequency to the high frequency side. If the down-converting carrier is varied as described above, however, compatibility with conventional VTRs is lost. Furthermore, if the down-converting carrier is set to too high a frequency, the frequency band of the down-converted chroma signal overlaps the recording band of the frequency modulated luminance signal. In actual practice, therefore, a sufficiently high carrier frequency cannot be set, so that a wholesale improvement of characteristics cannot be expected without regard for the problem of compatibility.

To improve characteristics using only the circuits on the playback side without changing the down-converted carrier, a method has been proposed which emphasizes the edge of the reproduced chroma signal. Using this edge improvement method, the characteristics are only partly improved and the recording band cannot be enlarged fundamentally. Also, there is the disadvantage that the S/N (signal-to-noise) ratio is deteriorated.

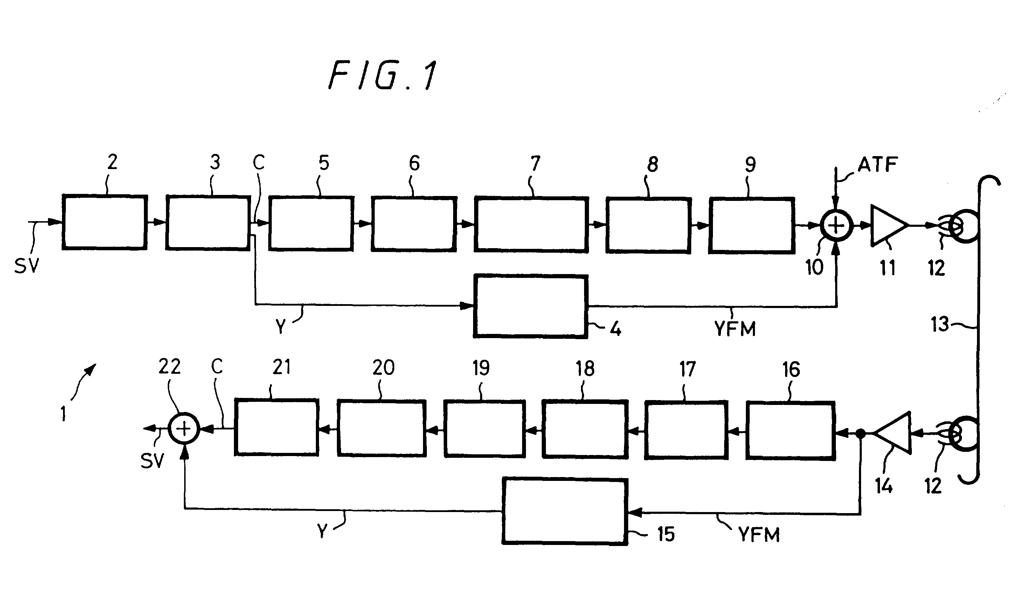

Figure 1 of the accompanying drawings shows an example of a conventional VTR 1. As shown in Figure 1, a video signal SV is supplied to an AGC (automatic gain control) circuit 2, in which the signal level is corrected. The corrected signal from the AGC circuit 2 is supplied to a Y/C separating circuit 3, in which the signal is separated to provide a luminance signal Y and a chroma signal C.

In the VTR 1, while the luminance signal Y is frequency-modulated by a luminance signal processing circuit 4 to produce a recording signal YFM, the chroma signal C is supplied through a bandpass filter (BPF) circuit 5 to an ACC (automatic chroma level control) circuit 6, in which the signal level of the chroma signal is corrected, and then fed to an emphasising circuit 7. The chroma signal is emphasised by the emphasising circuit 7 and then down-converted by a converting circuit 8. The down-converted chroma signal is then supplied through a low-pass filter (LPF) circuit 9 to an adding circuit 10 in which it is added with a tracking control pilot signal ATF and the recording signal YFM. An output signal from the adding circuit 10 is supplied through an amplifying circuit 11 to a magnetic head 12, whereby recording tracks are sequentially formed on a magnetic tape 13, thereby recording the video signal on the recording tracks.

In the reproducing system of the VTR 1, an output signal from the magnetic head 12 is amplified by an amplifying circuit 14 and then the luminance signal is demodulated by a luminance signal processing circuit 15. The chroma signal component is extracted from the output of the amplifying circuit 14 by a low-pass filter (LPF) circuit 16 and the phase characteristics are corrected. The signal level of this chroma signal component is then corrected by an ACC circuit 17. The output of the ACC circuit 17 is supplied to a converting circuit 18, in which the signal is converted into a signal of the original frequency band. This signal is then sequentially supplied through a band-pass filter (BPF) circuit 19 and a comb filter circuit 20 to a de-emphasising circuit 21. The chroma signal is de-emphasised and then added to the luminance signal by an adder circuit 22, whereby the video signal SV is output from the adder circuit 22.

In this kind of VTR, the picture quality is improved by enlarging the frequency band of the luminance signal. It is therefore considered that, if the frequency band of the chroma signal is enlarged, then the picture quality would be further improved. For the luminance signal recorded on the magnetic tape at its high band side, the frequency band can be enlarged comparatively easily while maintaining compatibility with the conventional format. However, the chroma signal is recorded on the magnetic tape at its low band side, and the frequency band thereof is limited, so the frequency band cannot be enlarged substantially while maintaining compatibility with the conventional format.

Reference is directed to the disclosure of:-
IEICE TRANSACTIONS vol. E-72, no. 4, 30 April 1989, TOKYO JP pages 324 - 325, XP000046974 M.KOBAYASHl ET AL 'Chrominance Bandwidth Expansion of Color-under VCR' .

According to a first aspect of the invention there is provided video signal recording apparatus in which a chroma signal contained in a video signal is down-converted and then recorded on a predetermined recording medium, the apparatus comprising a sampling circuit for processing the chroma signal in an offset sub-sampling fashion, wherein the chroma signal sampled by the sampling circuit is recorded on the recording medium and a burst signal for detecting a phase of the chroma signal is not sub-sampled and is then recorded on the recording medium.

According to a second aspect of the invention there is provided a video signal reproducing apparatus for reproducing a video signal in which a chroma signal has been down-converted and then recorded on a predetermined recording medium, the apparatus comprising: a decoder circuit for decoding the down-converted chroma signal contained in the video signal reproduced from the recording medium so that the down-converted chroma signal has its original frequency band; an interpolating circuit for interpolating an offset amount of the chroma signal; a first crosstalk cancel circuit for cancelling a crosstalk component of the interpolated chroma signal; and a second crosstalk cancel circuit for cancelling a crosstalk component from an output of the decoder, wherein the chroma signal is phase-adjusted within the decoder by phase-comparing an output signal of the second crosstalk cancel circuit with a reference signal.

In accordance with a third aspect of the invention there is provided a magnetic recording and reproducing apparatus for reproducing a chroma signal and a luminance signal from a predetermined magnetic recording medium and in which the chroma signal is processed in a non-linear emphasising processing fashion, compressed in frequency band, down-converted and then recorded together with the luminance signal, the apparatus comprising: a magnetic head for outputting a reproduced signal from the recording medium; an interpolating circuit for extracting the chroma signal from the reproduced signal and interpolating the chroma signal so that the frequency band of the chroma signal is expanded; a non-linear de-emphasising circuit for processing an output signal of the interpolating circuit in a non-linear de-emphasising processing fashion to demodulate the chroma signal; and a de-emphasising circuit for suppressing a side band of a burst signal of the chroma signal contained in the reproduced signal. wherein an automatic phase control (APC) loop is formed on the basis of the burst signal output from the de-emphasising circuit and whose side band is suppressed.

Embodiments of the invention provide a recording apparatus which can improve a frequency band of a chroma signal under the condition that compatibility with a conventional recording apparatus can be maintained.

Further, embodiments of the invention provide a reproducing apparatus which can satisfactorily improve a frequency band of a chroma signal under the condition that compatibility with a conventional video signal recording apparatus can be maintained.

In addition, embodiments of the invention provide a magnetic reproducing apparatus which can improve the picture quality of a reproduced picture satisfactorily as compared with a conventional magnetic reproducing apparatus.

In addition, embodiments of the invention provide a reproducing apparatus in which a band of a chroma signal can be improved while maintaining compatibility with a conventional video signal reproducing apparatus that reproduces a down-converted chroma signal.

Furthermore, embodiments of the invention provide magnetic reproducing apparatus such as a video tape recorder that records a down-converted chroma signal, where, even when the chroma signal is processed in a non-linear emphasising processing fashion, compressed in band, down-converted and then recorded, the phase of the reproduced chroma signal can be reliably corrected by a simple arrangement.

Embodiments of the invention will now be described, by way of example, with reference to the accompanying drawings in which:
Figure 1 is a block diagram showing a conventional video tape recorder (VTR);
Figure 2 is a block diagram showing a recording system of a first embodiment of the present invention;
Figure 3 is a block diagram showing a reproducing system of the first embodiment;
Figures 4A to 4D are explanatory diagrams showing sub-sampling states in operation of the first embodiment;
Figure 5 is an explanatory diagram showing an interpolated state in operation of the first embodiment;
Figure 6 is a characteristic graph of sampling frequency versus level to which reference will be made in explaining the operation of the first embodiment;
Figure 7 is a characteristic graph of a symmetrical roll-off characteristic to which reference will be made in explaining operation of the first embodiment;
Figure 8 is a block diagram showing a circuit arrangement of a main portion of a reproducing system according to a second embodiment of the invention;
Figure 9 is a block diagram showing a video tape recorder according to a third embodiment of the invention;
Figure 10 is a block diagram showing an example of a specific arrangement of a recording and reproducing system of the video tape recorder shown in Figure 9;
Figure 11 is a block diagram showing a modified example of the recording and reproducing system shown in Figure 10;
Figure 12 is a block diagram showing an example of a specific arrangement of a recording and reproducing system of the third embodiment of the invention;
Figure 13 is a schematic diagram showing a de-emphasising processing circuit used in the recording and reproducing system shown in Figure 12; and
Figure 14 is a schematic diagram showing a de-emphasising processing circuit for use in a fourth embodiment of the invention.

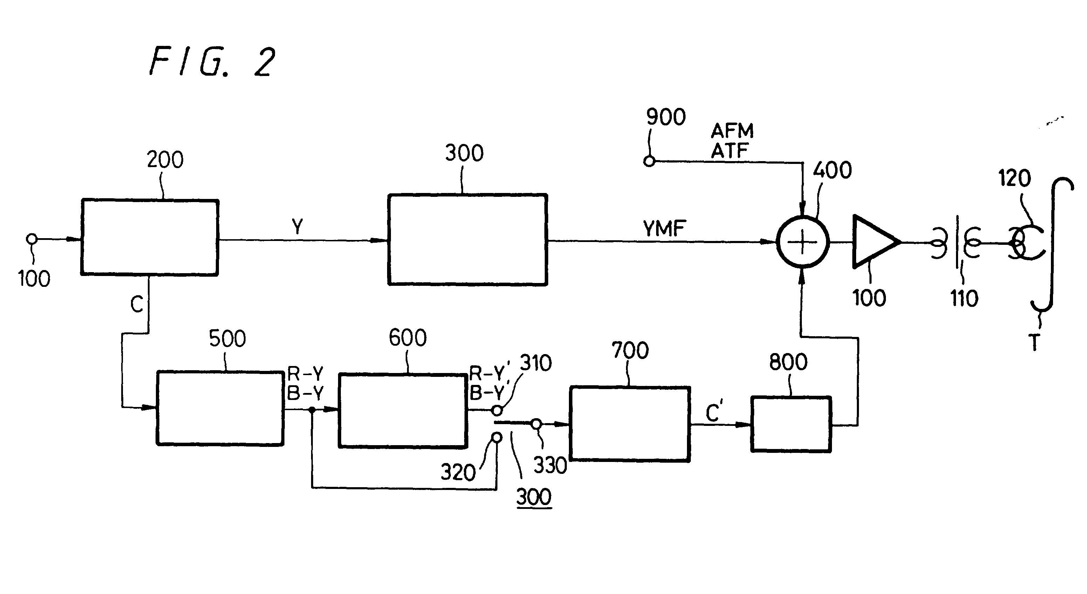

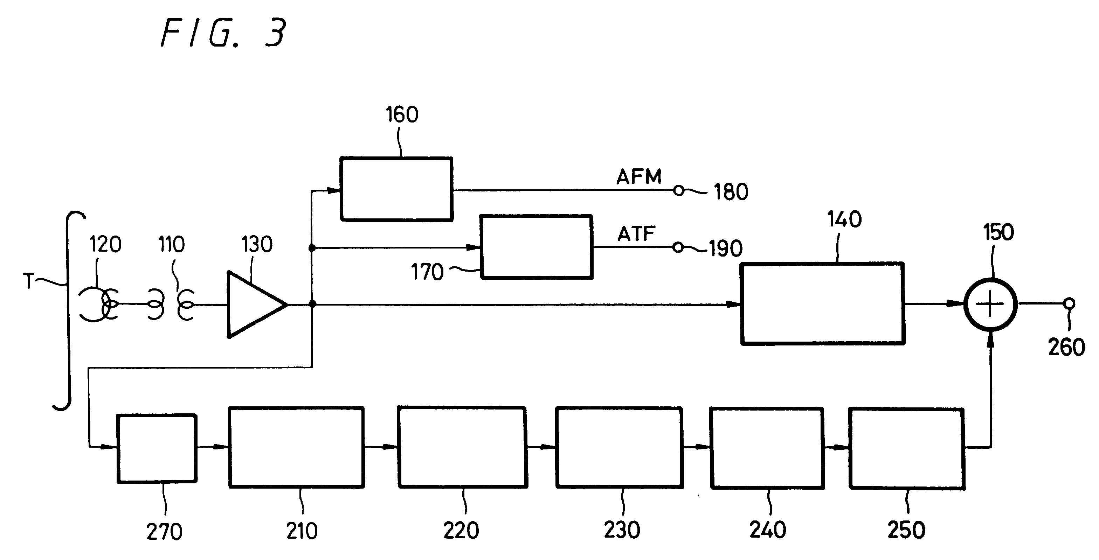

The first embodiment of the invention is a video tape recorder (VTR) whose format conforms to a so-called 8-mm video tape recorder. Figure 2 shows in block form a circuit arrangement of a recording system of the VTR, and Figure 3 shows in block form a circuit arrangement of a reproducing system of the VTR.

Referring first to the recording system of Figure 2, a composite video signal to be recorded is applied to an input terminal 100. The composite video signal applied to the input terminal 100 is supplied to a luminance/chroma signal separating circuit 200, in which the signal is separated to provide a luminance signal Y and a chroma signal C. The luminance signal Y is supplied to a luminance signal processing circuit 300 in which the signal is processed in accordance with some suitable recording signal processing system such as frequency modulation or the like, and a frequency-modulated luminance signal YFM is supplied to a mixer 400.

The chroma signal C from the luminance/chroma signal separating circuit 200 is supplied to a colour difference decoder 500 which derives red and blue colour difference signals R-Y and B-Y. Also, a burst signal having the same colour subcarrier frequency f_{sc} as that of the chroma signal C, and which is superimposed upon the horizontal blanking period of the video signal, is supplied from the luminance/chroma separating circuit 200 to the colour difference decoder 500 where it is processed.

The colour difference signals R-Y and B-Y from the colour difference decoder 500 are supplied to an offset sub-sampling circuit 600, in which they are processed in a predetermined offset sub-sampling fashion. The offset sub-sampling processing will be described below. After processing in the offset sub-sampling circuit 600, colour the de-emphasising processing circuit 560 to the APC detecting circuit 552.

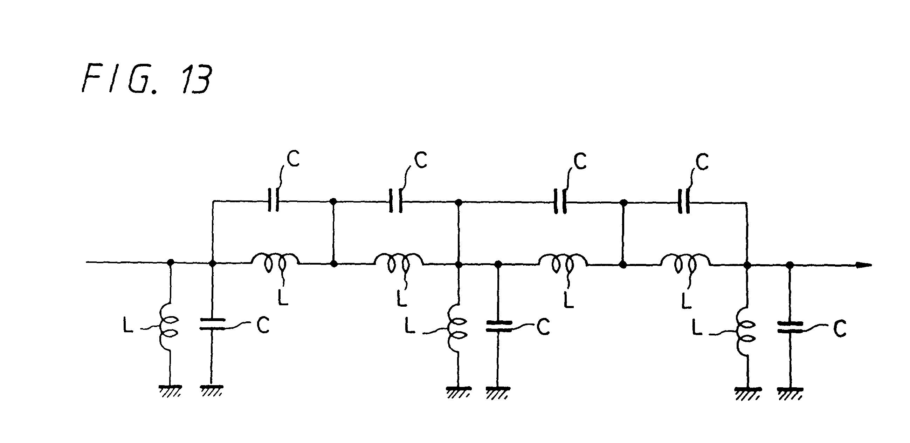

Figure 13 of the accompanying drawings shows the de-emphasising processing circuit 560 more in detail. As shown in the figure, the de-emphasising processing circuit 560 is a bandpass filter circuit that is formed by a combination of capacitors C and coils (inductors) L thereby to suppress a side band wave of the burst signal.

The APC detecting circuit 552 waveform-shapes the burst signal contained in the colour difference signals and forms the APC loop with reference to the waveform-shaped burst signal. The input signal to the interpolating circuit 537 is then input to the de-emphasising processing circuit 560.

Thus, in the video tape recorder 430, the APC loop can be formed while the time required for the interpolation processing is reduced and the phase of the reproduced chroma signal can be corrected reliably by the APC loop.

In the above arrangement. when the chroma signal that was processed in a non-linear emphasising processing fashion, compressed in band, down-converted and then recorded, is reproduced, the chroma signal is converted into the colour difference signals and then processed in a de-emphasising processing fashion so as to suppress the side band of the burst signal independently thereby to form the APC loop, whereby the phase of the reproduced chroma signal can be corrected reliably by the simple arrangement. The chroma signal can therefore be expanded in band. processed in a non-linear de-emphasising fashion and then output, making it possible to improve the picture quality of the reproduced picture further as compared with the previous systems.

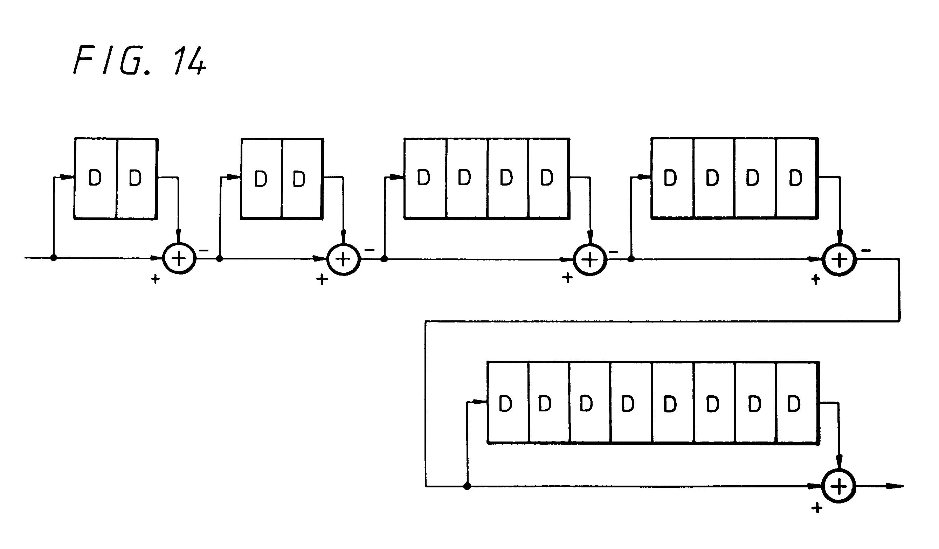

While the bandpass filter circuit described above is formed by the combination of the capacitors C and the coils L and the side band of the burst signal is suppressed by the bandpass filter circuit, the following variant is also possible. When a reproduced signal is converted into a digital signal and then processed, a bandpass filter circuit may be formed by a combination of delay circuits D and subtracting circuits as shown in Figure 14.

While the side band of the burst signal is suppressed by using the bandpass filter circuit as described above, the side band of the sampling clock is selected to have a frequency of f_{sc}/4 (f_{sc} being the colour subcarrier frequency of the video signal, ie, 3.58 MHz), and sampling in which the signal is offset by 90° between each field and the next, (ie, one cycle is formed of 4 fields) is carried out. The sampling frequency is equal to (3.58 MHz + 4) and therefore corresponds to about 895 kHz.

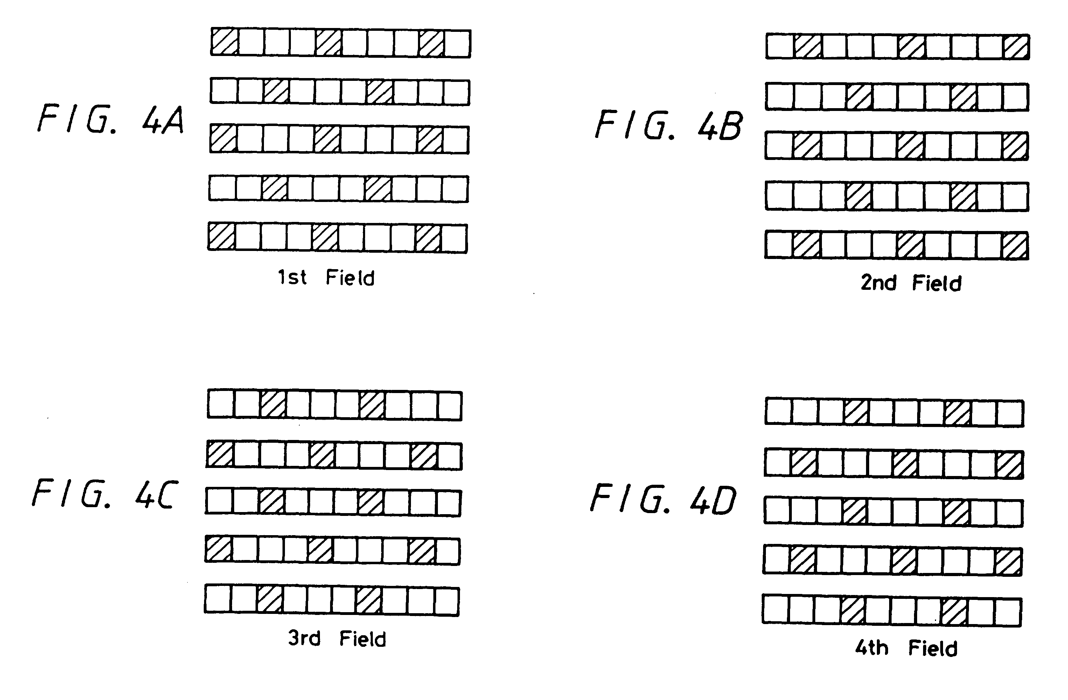

In the sub-sampling process, the sampling points shown hatched in Figures 4A to 4D are sampled in successive fields. In this case, since interlace scanning is carried out, the spatial position of lines is different in odd-fields and even-fields. During the first field, the sub-sampling processing involves one sample being taken for every four samples of each line as shown in Figure 4A. In the subsequent sampling processing, the offset of 90° is introduced for every field, an offset of 180° being introduced every frame, and an offset of 180° is introduced at every line.

More specifically, during the next field (the second field), as shown in Figure 4B, sampling where the phase is offset by 90° is carried out once every four samples. Further, during the third field (Figure 4C) and the fourth field (Figure 4D), sampling in which the phase is offset by 90° is again carried out. During the next field (the fifth field), sampling in which the phase is the same as that of the first field is carried out. The sampling cycle over four fields will then be repeated.

In this embodiment, the chroma signal whose horizontal lines are rejected and selected by the sampling process is recorded on the video tape. The burst signal that is a reference signal of the chroma signal is not processed by the offset sub-sampling process and is recorded.

The circuit arrangement of a reproducing system for reproducing the recorded video signal will now be described with reference to Figure 3.

As shown in Figure 3, a signal reproduced from the video tape T by the rotary head apparatus 120 is supplied via the rotary transformer 110 and a playback amplifier 130 to a luminance reproducing processor circuit 140. A frequency- modulated luminance signal YFM contained in the reproduced signal is detected by the luminance reproducing processor circuit 140 and this luminance signal is demodulated. The demodulated luminance signal Y is supplied to a mixer 150.

The reproduced signal from the playback amplifier 130 is supplied to bandpass filters 160 and 170. The bandpass filters 160, 170 have pass bands corresponding to recording bands of the frequency-modulated audio signal AFM and the tracking pilot signal ATF. The frequency-modulated audio signal AFM and the tracking pilot signal ATF are therefore supplied to terminals 180 and 190 respectively.

In this embodiment, the reproduced signal from the playback amplifier 130 is supplied to a bandpass filter 270. The pass band centre frequency of the bandpass filter 270 is selected to be 743 kHz to extract the down-converted recorded chroma signal C' (including the burst signal). An output of the bandpass filter 270 is supplied to a chroma reproducing processor circuit 210 and converted into baseband colour difference signals R-Y', B-Y'. In the reproduction processing, processing is carried out with the phase of the burst signal obtained through the reproduction employed as a reference phase. The converted colour difference signals R-Y', B-Y' are supplied to a sub-sampling circuit 220, in which they are sampled with a sampling frequency of f_{sc}/4. This sampling frequency f_{sc}/4 corresponds, for example, to about 895 kHz as described above.

The sampled colour difference signals are supplied to an interpolating circuit 230 and interpolated in offset amount to provide a colour difference signal of a transmission band of f_{sc}/2. This interpolating circuit 230 might be formed of a frame memory where the interpolation is carried out by utilising colour difference signals of the immediately preceding (or ahead of, or behind) 4 fields. The interpolated colour difference signal is supplied to a chroma noise reducer (CNR) 240, in which noise is eliminated. Then, the colour difference signal from which the noise has been eliminated is supplied to an encoder 250 in which the signal is encoded to provide a chroma signal modulated by a colour subcarrier of 3.58 MHz.

The processed chroma signal obtained through the playback processing is supplied to the mixer 150 and added to the luminance signal to provide a composite video signal. This composite video signal is supplied to a reproduced signal output terminal 260.

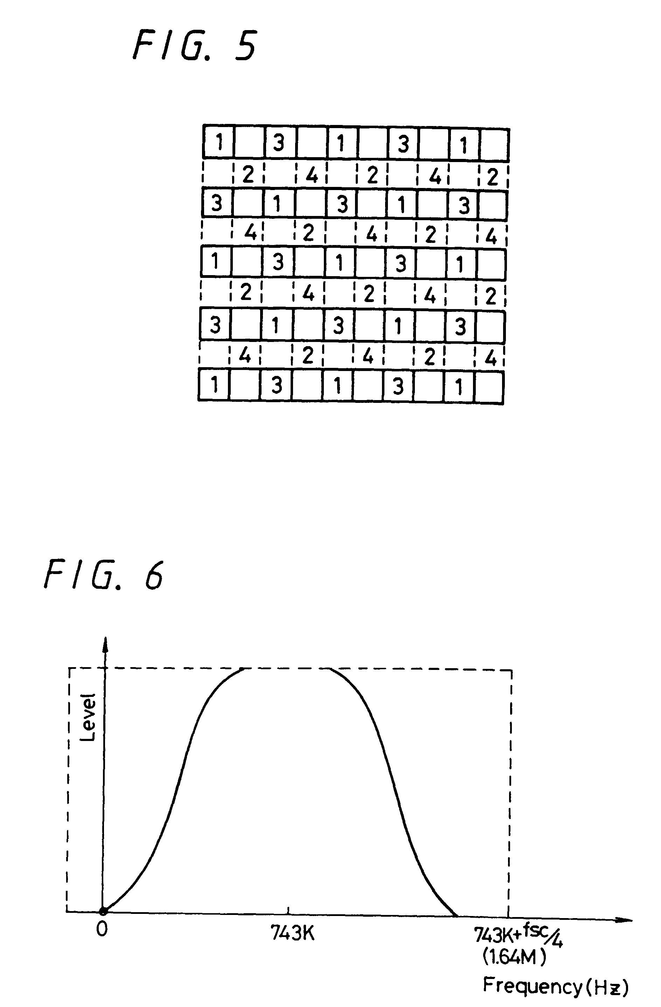

The processing of the chroma signal in the reproducing system will now be described with reference to Figure 5. Figure 5 shows an interpolation state in the interpolating circuit 230. In Figure 5, the numerals indicated on respective pixel positions represent field numbers of the first to fourth fields (see Figures 4A to 4D) on which the sampling is carried out cyclically. A reproduced chroma signal is obtained by interpolating the offset amounts using the chroma signals of the four fields.

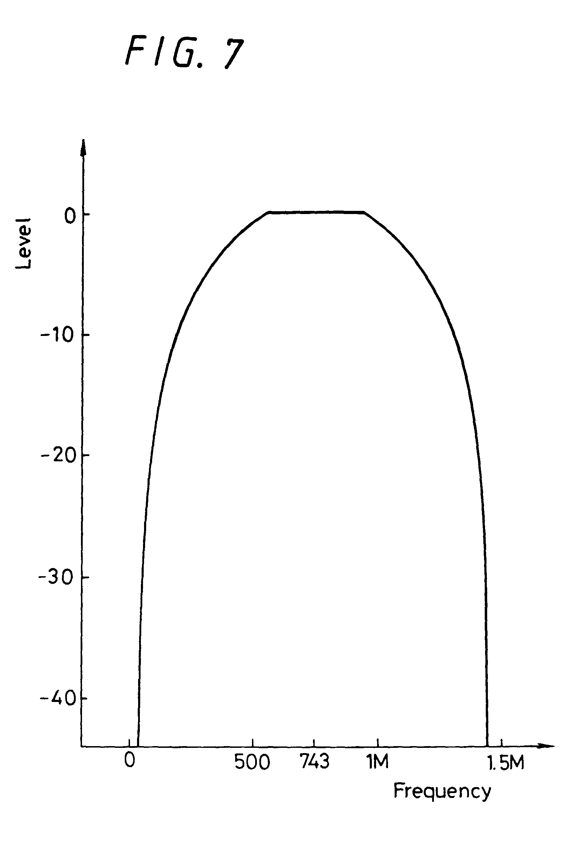

A transmission rate of the reproduced chroma signal thus obtained becomes f_{sc}/2 and the band of the reproduced chroma signal becomes f_{sc} ± (f_{sc}/4). Figure 6 shows this frequency band. Since the colour subcarrier frequency f_{sc} is 743 kHz, the conventional system where the sub-sampling is not effected provides a band that is centred on 743 kHz and determined by the chroma extracting filter characteristic as shown by the solid line. According to this embodiment, the band up to 1.64 MHz which corresponds to f_{sc} + (f_{sc}/4) shown by a broken line is enlarged in flat. A flat band up to the sub-sampling clock frequency is realised if a transmission frequency characteristic, until the chroma signal is interpolated upon reproduction after having been sub-sampled and then recorded on the tape, is presented as a symmetrical cosine roll-off characteristic. Figure 7 shows a graph of a symmetrical roll-off transmission characteristic where - ∞ is presented as 700 kHz.

When the chroma signal is processed as described above, as compared with the conventional case where the chroma signal of band ranging from about ± 400 to 500 kHz is reproduced, the band of the chroma signal is widened twice or more, thereby considerably improving the frequency characteristic of the chroma signal. Therefore, a picture based on the reproduced video signal developed at the output terminal 260 is excellent in terms of colour reproducibility. In this case, since the recording format, such as the carrier, the bandwidth of the signal recorded on the video tape and so on, is the same as that of the conventional system (an 8-mm video system in this embodiment), video tape on which recording is effected by the conventional VTR can be reproduced with ease, thereby maintaining compatibility with the conventional VTR. Also, the characteristics of the elements and parts such as video tape, recording and reproducing heads or the like need not be improved. From this standpoint, compatibility with the conventional VTR can be maintained. Further, the frequency characteristic of the chroma signal is improved fundamentally, and not just in part, thereby preventing deterioration in the signal-to-noise (S/N) ratio.

In this embodiment, since the burst signal that forms a reference signal of the chroma signal is not sub-sampled before recording, processing such as phase-detection of the burst signal in the reproducing system circuit or the like can be carried out by circuits of the same arrangements as those in the conventional VTR, thereby simplifying the arrangement of the reproducing system. Further, if the burst signal is not sub-sampled and then recorded as described in this embodiment, the burst signal can be prevented from being offset and the occurrence of flicker or the like due to the phase shift based on the offset can be avoided.

While the sub-sampling is carried out with an offset of 90° between the fields as described above, the sub-sampling can be carried out under other offset conditions. While the chroma signal is converted into the colour difference signals and then processed as described above, the chroma signal may be processed without being converted into the colour difference signals. However, if the chroma signal is converted into the colour difference signals and then processed, the arrangement of the processing circuit can be simplified.

In the first embodiment, since the chroma signal is recorded using the offset sub-sampling process and then restored by the interpolation processing upon playback, a chroma signal of a band several times as wide as usual can be recorded and then reproduced using the same recording band as in the conventional system. Also, since the burst signal of the chroma signal is not sub-sampled before recording, the recording state of the burst signal is the same as that in the conventional system, thereby maintaining compatibility with the conventional system.

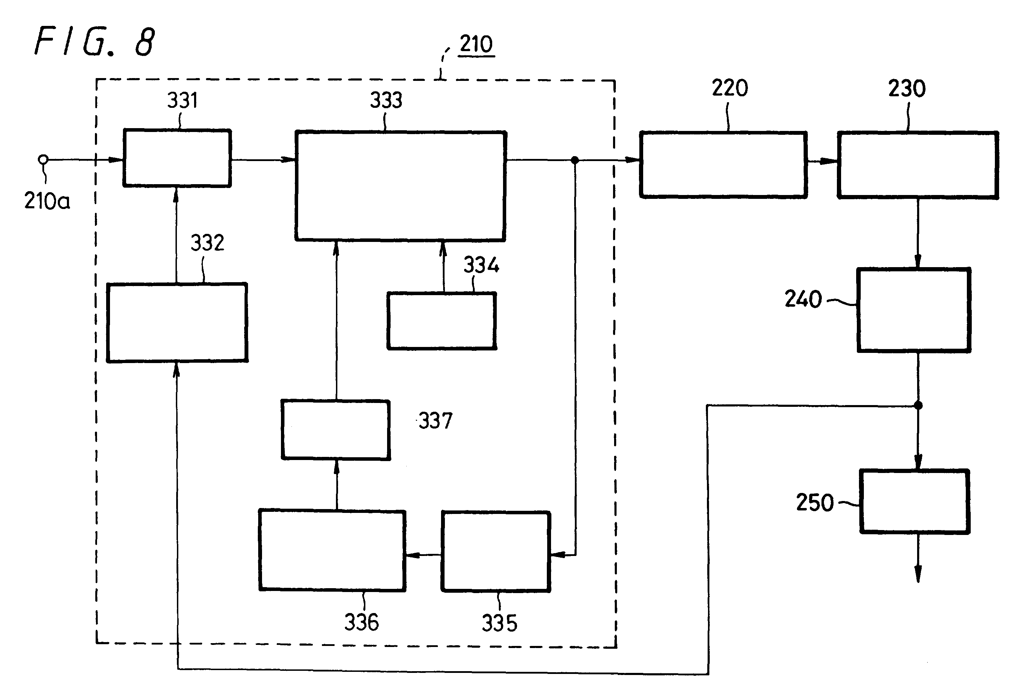

A second embodiment of the invention will now be described. Figure 8 shows an arrangement of another example of a chroma reproducing processor circuit 210. As shown in the figure, the output applied to a terminal 210a from the bandpass filter 270 (Figure 3) is supplied to an automatic chroma level control (ACC) circuit 331. The ACC circuit 331 controls the level of the chroma signal so that it is constant on the basis of the level data of the burst signal supplied thereto from a burst level detecting circuit 332. Here, the burst level detecting circuit 332 detects the level data from the burst signal contained in the output of the chroma noise reducer 240 mentioned earlier.

An output of the ACC circuit 331 in which the level of the chroma signal is constant is supplied to a colour difference decoder 333. The colour difference decoder 333 is arranged to convert the down-converted chroma signal into colour difference signals. Thus, when the frequency signal supplied from an automatic frequency control circuit 334 is mixed into the chroma signal in the colour difference decoder 333, the down-converted chroma signal is converted into the colour difference signals R-Y', B-Y'.

During conversion in the colour difference decoder 333, jitter eliminating processing utilising an automatic phase control (APC) circuit 337 is effected. More specifically, an output of the colour difference converting decoder 333 is supplied to a simple comb filter 335. Then, colour difference signals from which the crosstalk component has been eliminated in a simple manner by this comb filter 335 are supplied to a burst phase detecting circuit 336. A burst signal component contained in the colour difference signals is detected by this burst phase detecting circuit 336 and phase data from this burst signal is supplied to the APC circuit 337. The phase difference between the reference signal and the burst signal is detected by the APC circuit 337 and the phase difference thus detected is supplied to the colour difference decoder 333 as error data. The colour difference decoder 333 carries out the phase correction on the basis of the error data supplied thereto from the APC circuit 337 thereby obtaining a chroma signal (colour difference signal) whose phase is adjusted, ie, whose jitter component has been eliminated.

When the phase adjustment (jitter eliminating processing) within the chroma reproducing processor circuit 210 is effected, the burst signal whose crosstalk component is eliminated must be fed back to the chroma reproducing circuit 210 to form a loop. If the signal whose crosstalk component is eliminated after the interpolation processing is fed back to the APC circuit 337 of the chroma reproducing processor circuit 210, then the chroma component that has been interpolated and a chroma component that has not yet been interpolated are changed in signal state. There is then the risk such that the APC circuit 37 will malfunction. In the circuit arrangement of this embodiment, crosstalk in the burst component of the colour difference signals to be utilised by the colour difference converting decoder 333 within the chroma reproducing processor circuit 210 to adjust the phase is eliminated by the simple line comb filter 335 within the chroma reproducing processor circuit 210, thereby protecting the detected burst component from being affected by the crosstalk component. Thus, the automatic phase control circuit (APC) 337 can detect a phase error without malfunction and the phase can be adjusted correctly.

Since it is sufficient that only the burst component can be correctly detected in the loop composed of the circuits including the APC circuit 337, a comb filter that eliminates the crosstalk component perfectly from a characteristic standpoint is not required, and a simple comb filter can be utilised in practice. Therefore, a comb filter that is relatively inexpensive can be used as the comb filter 335 for the APC circuit 337, thereby suppressing the increase in cost when two sets of crosstalk eliminating filters are used.

While the crosstalk component of the chroma signal (colour difference signals) is eliminated by the comb filter in the embodiment described above, the crosstalk component may be eliminated by a crosstalk eliminating circuit of other arrangement. Further, the sub-sampling is carried out with an offset of 90° between fields as described above, the sub-sampling may be carried out under other offset conditions. Furthermore, while the chroma signal is converted into the colour difference signals and then processed as described above, the chroma signal may be processed in the form of chroma signal. However, if the chroma signal is converted into the colour difference signals and then processed, the circuit arrangement of the processing circuit can be simplified.

In the second embodiment, since the offset sub-sampling process is carried out for recording the chroma signal and then the chroma signal is restored by the interpolation processing upon playback, a chroma signal of band several times wider can be reproduced utilising the same recording band as that of the known system.

In this case, since the crosstalk is eliminated after the interpolation processing, the band can be most efficiently enlarged under the condition that the Nyquist theorem is satisfied. Also, the phase of the chroma signal is adjusted by the signal whose crosstalk component is eliminated prior to interpolation, so the phase adjustment circuit can be prevented from malfunctioning.

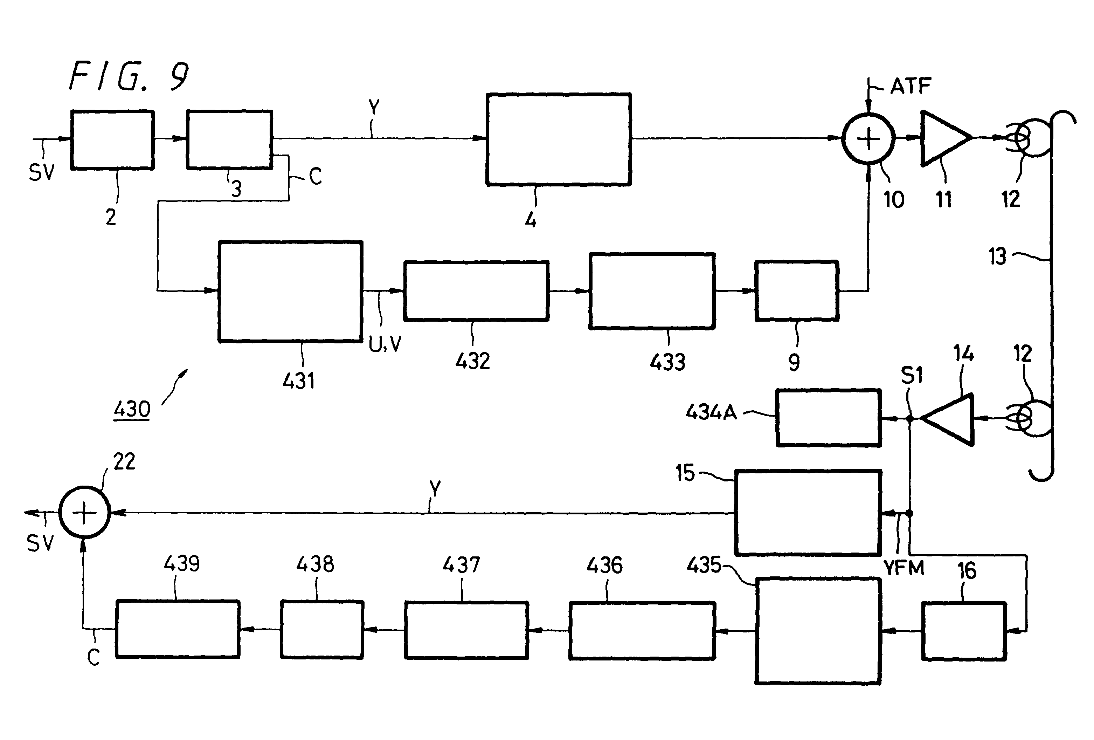

A third embodiment of the present invention will now be described. Figure 9 shows in block form an overall arrangement of the third embodiment which is applied to a video tape recorder (VTR). In Figure 9, parts corresponding to those of Figure 1 are marked with the same references and therefore need not be described in detail.

In Figure 9, reference numeral 430 generally designates a video tape recorder in which the band of a chroma signal is extended while maintaining compatibility with the conventional format. To this end, in the video tape recorder 430, after the chroma signal is compressed in band, the signal is processed in a non-linear emphasising processing fashion and then recorded on the magnetic tape 13.

In the video tape recorder 430, the chroma signal is converted into colour difference signals U and V by a colour difference signal converting circuit 431. The colour difference signals U, V are supplied to a sub-sampling circuit 432 in which they are compressed in band according to the offset sub-sampling processing. The output signal from the sub-sampling circuit 432 is supplied to a chroma signal processing circuit 433, in which the signal is converted in the form of a chroma signal and then down-converted. Thus, in the video tape recorder 430, the chroma signal is compressed in band to the frequency band specified by the conventional format and then recorded.

In the reproducing system of the video tape recorder 430, the reproduced signal S1 from the magnetic head 12 is amplified by the amplifying circuit 14 and supplied to an ATF circuit 434A which then detects a pilot signal ATF for tracking control. Thus, in the video tape recorder 430, the tracking error signal is generated by the ATF circuit 434A and the tracking is controlled on the basis of the tracking error signal.

A reproduced chroma signal processing circuit 435 extracts a chroma signal component from the reproduced signal S1 supplied thereto through the low-pass filter circuit 16 and converts the extracted chroma signal component to colour difference signals.

Colour difference signals from the reproduced chroma signal processing circuit 435 are sub-sampled by a sub-sampling circuit 436 and the output signal from the sub-sampling circuit 436 is interpolated utilising a colour difference signal of a preceding line or succeeding line by an interpolating circuit 437, whereby image information, in which horizontal lines were discarded and proper lines were selected by the sub-sampling circuit 432, is interpolated.

A comb filter 438 corrects the frequency characteristic of the output signal from the interpolating circuit 437 and suppresses a noise component of the signal using a field memory.

Therefore, in the video tape recorder 430, the output signal of the comb filter circuit 438 is converted in the form of the chroma signal by a frequency converting circuit 439, thereby reproducing the chroma signal that was band-compressed and then recorded.

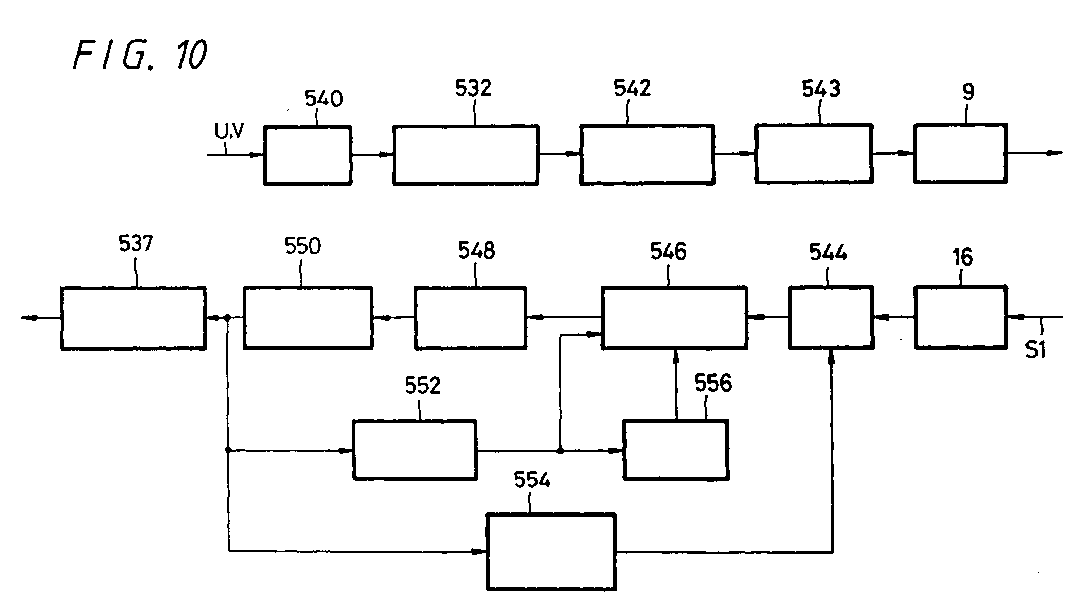

When the chroma signal is compressed in band and recorded, it is considered that, if the chroma signal is processed in a non-linear emphasising processing fashion and recorded, then the deterioration of picture quality can be reduced further. A method in which a chroma signal is sub-sampled and then processed in a non-linear emphasising fashion is shown in Figure 10. Figure 10 shows in block form an arrangement of a recording and reproducing system of the video tape recorder. As shown in the figure, in the recording system, the signal levels of the colour difference signals U, V are corrected by an ACC circuit 540 and supplied through a sub-sampling circuit 532 to a non-linear emphasising processing circuit 542, in which they are processed in a non-linear emphasising fashion. The output signal from the nonlinear emphasising processing circuit 542 is supplied to a converting circuit 543 in which the signal is converted into a chroma signal which is then down-converted.

In the reproducing system, the reproduced signal S1 is sequentially supplied through the low-pass filter circuit 16 and an ACC circuit 544 to a converting circuit 546, in which the signal is converted into colour difference signals. The frequency characteristic of these colour difference signals is then corrected by a comb filter circuit 548. Accordingly, the comb filter circuit 438 in Figure 9 may be omitted.

Further, in the reproducing system, the colour difference signals are processed by a de-emphasising circuit 550 in a non-linear de-emphasising processing fashion and then delivered through an interpolating circuit 537.

With the above arrangement, however, it is frequently observed that flicker occurs in the reproduced picture. More specifically, this kind of video tape recorder 430 needs an APC loop and an ACC loop. In the circuit arrangement shown in Figure 10, the output of the de-emphasising circuit 550 is supplied to an APC detecting circuit 552 and an ACC detecting circuit 554 which then detect signal levels for the APC control and the ACC control respectively. The detected result from the APC detecting circuit 552 is supplied to an AFC circuit 556 which controls the phase of a reference signal that is used to convert a chroma signal. The detected result from the ACC detecting circuit 554 is supplied to the ACC circuit 544 which corrects the signal level of the reproduced signal S1.

It is, however, frequently observed that, even when the chroma signal which was processed in a non-linear emphasising processing fashion is processed in a non-linear de-emphasising processing fashion, the original frequency characteristic and amplitude characteristic of the chroma signal cannot be restored completely. In this case, if the chroma signal is then interpolated, it is erroneously interpolated so that flicker or the like occurs.

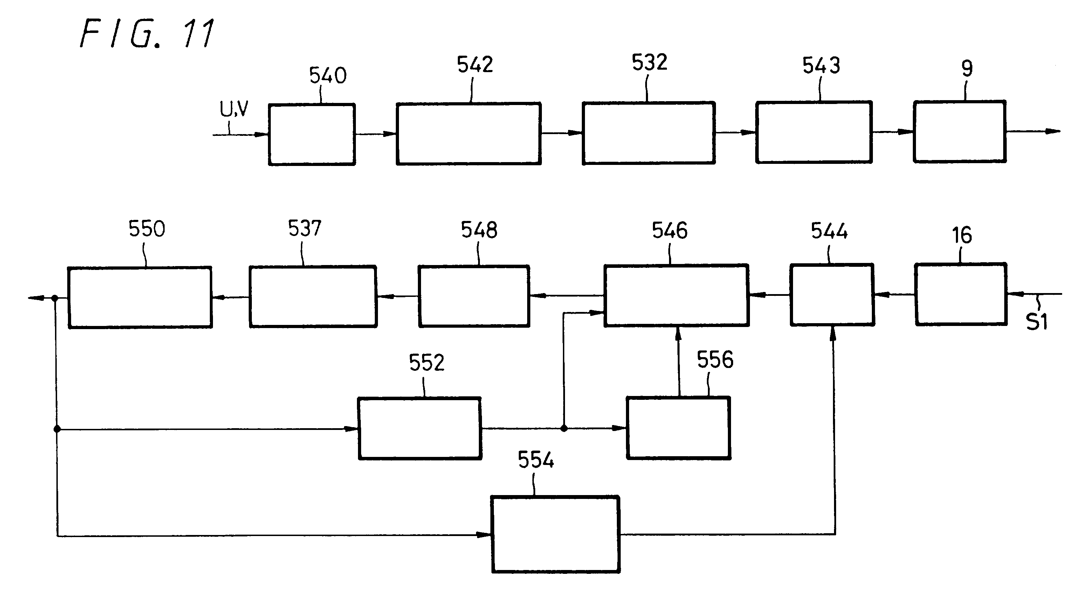

To solve the above problem, there is proposed a method in which the sub-sampling processing is effected after the non-linear emphasising processing has been carried out as shown in Figure 11. In Figure 11, parts corresponding to those of Figure 10 are marked with the same references and therefore need not be described in detail.

In the reproducing system shown in Figure 11, the order of the interpolating circuit 537 and the de-emphasising processing circuit 550 is changed in view of the recording system.

In the circuit arrangement of Figure 11, the interpolation processing requires plenty of time while the flicker or the like is prevented from occurring, which as a result hinders correct reproduction of the chroma signal.

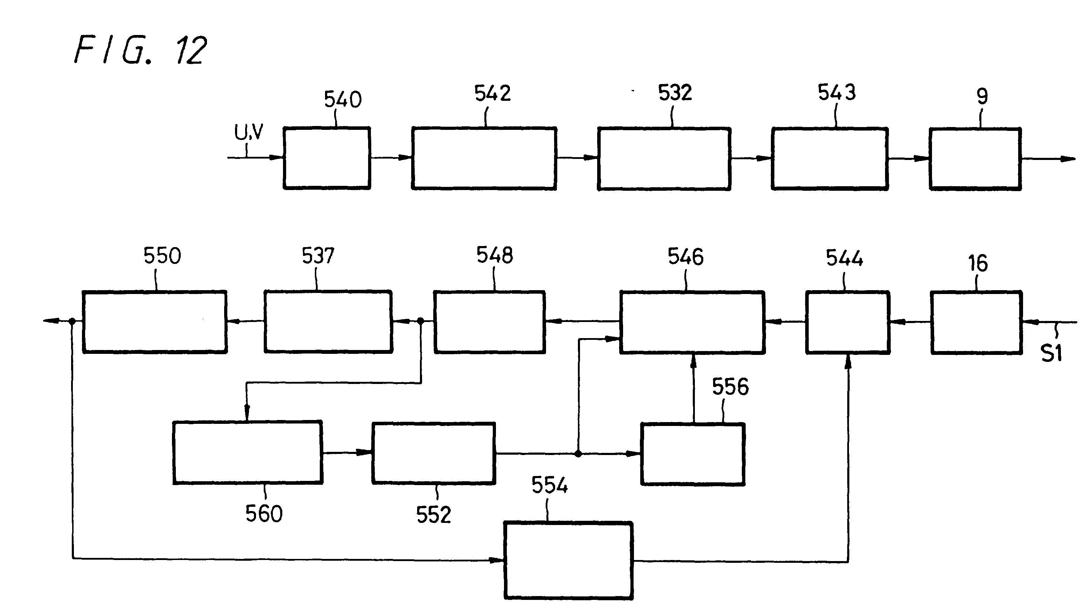

To overcome the above shortcoming, the recording and reproducing system can be modified as shown in Figure 12. In the embodiment of Figure 12, another de-emphasising processing circuit 560 is provided. The output signal of the comb filter circuit 548 is supplied through the de-emphasising processing circuit 560 to the APC detecting circuit 552.

Figure 13 of the accompanying drawings shows the de-emphasising processing circuit 560 more in detail. As shown in the figure, the de-emphasising processing circuit 560 is a bandpass filter circuit that is formed by a combination of capacitors C and coils L thereby to suppress a side band wave of the burst signal.

The APC detecting circuit 552 waveform-shapes the burst signal contained in the colour difference signals and forms the APC loop with reference to the waveform-shaped burst signal. The input signal to the interpolating circuit 537 is then input to the de-emphasising processing circuit 560.

Thus, in the video tape recorder 430, the APC loop can be formed while the time required for the interpolation processing is reduced and the phase of the reproduced chroma signal can be corrected reliably by the APC loop.

In the above arrangement, when the chroma signal that was processed in a non-linear emphasising processing fashion, compressed in band, down-converted and then recorded, is reproduced, the chroma signal is converted into the colour difference signals and then processed in a de-emphasising processing fashion so as to suppress the side band of the burst signal independently thereby to form the APC loop, whereby the phase of the reproduced chroma signal can be corrected reliably by the simple arrangement. The chroma signal can therefore be expanded in band, processed in a non-linear de-emphasising fashion and then output, making it possible to improve the picture quality of the reproduced picture further as compared with the previous systems.

While the bandpass filter circuit described above is formed by the combination of the capacitors C and the coils L and the side band of the burst signal is suppressed by the bandpass filter circuit, the following variant is also possible. When a reproduced signal is converted into a digital signal and then processed, a bandpass filter circuit may be formed by a combination of delay circuits D and subtracting circuits as shown in Figure 14.

While the side band of the burst signal is suppressed by using the bandpass filter circuit as described above, the side band of the burst signal may be suppressed by limiting the amplitude to a constant value using a limiter circuit.

While the chroma signal is converted into the colour difference signals and then processed as described above, the chroma signal may be processed directly.

Furthermore, while the above embodiment refers to a video tape recorder and the video signal being recorded on and reproduced from magnetic tape, the invention is not limited thereto and may be applied to a wide variety of magnetic recording and reproducing apparatus that can record and reproduce a video signal on and from a variety of magnetic recording media.

## Claims

1. Video signal recording apparatus in which a chroma signal (C) contained in a video signal (SV) is down-converted and then recorded on a predetermined recording medium (T, 13), the apparatus comprising:
sampling means (600, 432, 532) for processing said chroma signal (C) in an offset sub-sampling fashion, wherein said chroma signal sampled by said sampling means (600, 432, 532) is recorded on said recording medium (T, 13), and wherein a burst signal for detecting the phase of said chroma signal is not sub-sampled and is then recorded on said recording medium (T, 13).

2. Video signal reproducing apparatus for reproducing a video signal (SV) in which a chroma signal (C) has been down-converted and then recorded on a predetermined recording medium (T, 13), the apparatus comprising:
decoder means (333) for decoding the down-converted chroma signal contained in said video signal (SV) reproduced from said recording medium (T, 13) so that said down-converted chroma signal has its original frequency band;
interpolating means (230) for interpolating an offset amount of the chroma signal having the original frequency band;
first crosstalk cancel means (240) for cancelling a crosstalk component of the interpolated chroma signal; and
second crosstalk cancel means (335) for cancelling a crosstalk component from an output of said decoder means (333), wherein said chroma signal is phase-adjusted within said decoder (333) by phase-comparing an output signal of said second crosstalk cancel means (335) with a reference signal.

3. Magnetic recording and reproducing apparatus for reproducing a chroma signal (C) and a luminance signal (Y) from a predetermined magnetic recording medium (T, 13) and in which said chroma signal (C) is processed in a non-linear emphasising processing fashion, compressed in frequency band, down-converted and then recorded together with said luminance signal (Y), the apparatus comprising:
a magnetic head (12) for outputting a reproduced signal from said recording medium (T, 13);
an interpolating circuit (537) for extracting said chroma signal from said reproduced signal and interpolating said chroma signal so that the frequency band of said chroma signal is expanded;
a non-linear de-emphasising circuit (550) for processing an output signal of said interpolating circuit (537) in a non-linear de-emphasising processing fashion to demodulate said chroma signal; and
a de-emphasising circuit (560) for suppressing a side band of a burst signal of the chroma signal contained in said reproduced signal. wherein an autcmatic phase control loop is formed on the basis of said burst signal whose side band is suppressed and which is output from said de-emphasising circuit (560).

4. Magnetic recording and reproducing apparatus according to claim 3, wherein said de-emphasising circuit (560) is a bandpass filter circuit.

5. Magnetic recording and reproducing apparatus according to claim 4. wherein said bandpass filter circuit is formed by a combination of capacitors and inductors.

6. Magnetic recording and reproducing apparatus according to claim 4, wherein said bandpass filter circuit is formed by a combination of delay circuits and subtracters.

## Patentansprüche

1. Videosignalaufzeichnungsgerät, bei dem ein in einem Videosignal (SV) enthaltenes Chrominanzsignal (C) abwärts umgesetzt und dann auf einem vorgegebenen Aufzeichnungsträger (T, 13) aufgezeichnet wird, wobei das Gerät aufweist:
eine Abtasteinrichtung (600, 432, 532), um das Chrominanzsignal (C) in einer Offset-Subabtastweise zu verarbeiten, wobei das Chrominanzsignal, welches durch die Abtasteinrichtung (600, 432, 532) abgetastet wird, auf dem Aufzeichnungsträger (T, 13) aufgezeichnet wird, und wobei ein Burst-Signal zum Ermitteln der Phase des Chrominanzsignals nicht subabgetastet wird und dann auf dem Aufzeichnungsträger (T, 13) aufgezeichnet wird.

2. Videosignalwiedergabegerät zur Wiedergabe eines Videosignals (SV), bei dem ein Chrominanzsignal (C) abwärts umgesetzt wurde und dann auf einem vorgegebenen Aufzeichnungsträger (T, 13) aufgezeichnet wurde, wobei das Gerät aufweist:
eine Decodiereinrichtung (333) zur Decodierung des abwärts umgesetzten Chrominanzsignals, welches im Videosignal (SV) enthalten ist, welches aus dem Aufzeichnungsträger (T, 13) reproduziert wurde, so daß das abwärts umgesetzte Chrominanzsignal sein ursprüngliches Frequenzband hat;
eine Interpolationseinrichtung (230) zum Interpolieren einer Offset-Menge des Chrominanzsignals, welche das ursprüngliche Frequenzband hat;
eine erste Übersprechlöscheinrichtung (240) zum Löschen einer Übersprechkomponente des interpolierten Chrominanzsignals; und
eine zweite Übersprechlöscheinrichtung (335) zum Löschen einer Übersprechkomponente aus einem Ausgangssignal der Decodiereinrichtung (333), wo das Chrominanzsignal innerhalb des Decodierers (333) durch Phasenvergleich eines Ausgangssignals der zweiten Übersprechlöscheinrichtung (335) mit einem Referenzsignal phasenjustiert wird.

3. Magnetaufzeichnungs- und Wiedergabegerät zur Wiedergabe eines Chrominanzsignals (C) und eines Luminanzsignals (Y) aus einem vorgegebenen Magnetaufzeichnungsträger (T, 13) und bei dem das Chrominanzsignal (C) in einer nichtlinearen Emphasis-Verarbeitungsweise verarbeitet wird, welches bezüglich des Frequenzbandes komprimiert, abwärts umgesetzt und dann zusammen mit dem Luminanzsignal (Y) aufgezeichnet wurde, wobei das Gerät aufweist:
einen Magnetkopf (12) zur Ausgabe eines Wiedergabesignals aus dem Aufzeichnungsträger (T, 13);
eine Interpolationsschaltung (537) zur Extrahierung des Chrominanzsignals aus dem Wiedergabesignal und zum Interpolieren des Chrominanzsignals, so daß das Frequenzband des Chrominanzsignals expandiert wird;
eine nichtlineare De-Emphasis-Schaltung (550) zur Verarbeitung eines Ausgangssignals der Interpolationsschaltung (537) in einer nichtlinearen De-Emphasis-Verarbeitungsweise, um das Chrominanzsignal zu demodulieren; und
eine De-Emphasis-Schaltung (560) zur Unterdrückung eines Seitenbands eines Burst-Signals des Chrominanzsignals, welches im Wiedergabesignal enthalten ist, wobei eine automatische Phasensteuerschleife auf der Basis des Burst-Signals gebildet wird, dessen Seitenband unterdrückt ist und welches von der De-Emphasis-Schaltung (560) ausgegeben wird.

4. Magnetaufzeichnungs- und Wiedergabegerät nach Anspruch 3, wobei die De-Emphasis-Schaltung (560) eine Bandpaßfilterschaltung ist.

5. Magnetaufzeichnungs- und Wiedergabegerät nach Anspruch 4, wobei die Bandpaßfilterschaltung durch eine Kombination von Kondensatoren und Induktivitäten gebildet ist.

6. Magnetaufzeichnungs- und Wiedergabegerät nach Anspruch 4, wobei die Bandpaßfilterschaltung durch eine Kombination von Verzögerungsschaltungen und Subtrahiergliedern gebildet ist.

## Revendications

1. Appareil d'enregistrement de signal vidéo dans lequel un signal de chrominance (C) contenu dans un signal vidéo (SV) est converti par abaissement puis est enregistré sur un support d'information d'enregistrement prédéterminé (T, 13), l'appareil comprenant :
un moyen d'échantillonnage (600, 432, 532) pour traiter ledit signal de chrominance (C) à la façon d'un sous-échantillonnage à décalage dans lequel ledit signal de chrominance échantillonné par ledit moyen d'échantillonnage (600, 432, 532) est enregistré sur ledit support d'information d'enregistrement (T, 13) et dans lequel un signal de salve pour détecter la phase dudit signal de chrominance n'est pas sous-échantillonné puis est enregistré sur ledit support d'information d'enregistrement (T, 13).

2. Appareil de reproduction de signal vidéo pour reproduire un signal vidéo (SV) dans lequel un signal de chrominance (C) a été converti par abaissement puis enregistré sur un support d'information d'enregistrement prédéterminé (T, 13), l'appareil comprenant :
un moyen de décodeur (333) pour décoder le signal de chrominance converti par abaissement contenu dans ledit signal vidéo (SV) reproduit à partir dudit support d'information d'enregistrement (T, 13) de telle sorte que ledit signal de chrominance converti par abaissement présente sa bande de fréquences originale ;
un moyen d'interpolation (230) pour interpoler une valeur de décalage du signal de chrominance présentant la bande de fréquences originale ;
un premier moyen d'annulation de diaphonie (240) pour annuler une composante de diaphonie du signal de chrominance interpolé ; et
un second moyen d'annulation de diaphonie (335) pour annuler une composante de diaphonie d'une sortie dudit moyen de décodeur (333), dans lequel ledit signal de chrominance est réglé en phase dans ledit décodeur (333) en comparant en phase un signal de sortie dudit second moyen d'annulation de diaphonie (335) avec un signal de référence.

3. Appareil d'enregistrement et de reproduction magnétiques pour reproduire un signal de chrominance (C) et un signal de luminance (Y) à partir d'un support d'information d'enregistrement magnétique prédéterminé (T, 13) et dans lequel ledit signal de chrominance (C) est traité à la façon d'un traitement d'accentuation non linéaire, est comprimé du point de vue de la bande de fréquences, est converti par abaissement puis est enregistré en association avec ledit signal de luminance (Y), l'appareil comprenant :
une tête magnétique (12) pour émettre en sortie un signal reproduit à partir dudit support d'information d'enregistrement (T, 13) ;
un circuit d'interpolation (537) pour extraire ledit signal de chrominance à partir dudit signal reproduit et pour interpoler ledit signal de chrominance de telle sorte que la bande de fréquences dudit signal de chrominance soit étendue ;
un circuit de désaccentuation non linéaire (550) pour traiter un signal de sortie dudit circuit d'interpolation (537) à la façon d'un traitement de désaccentuation non linéaire afin de démoduler ledit signal de chrominance ; et
un circuit de désaccentuation (560) pour atténuer une bande latérale d'un signal de salve du signal de chrominance contenu dans ledit signal reproduit où une boucle de commande automatique de phase est formée sur la base dudit signal de salve dont une bande latérale est atténuée et qui est émis en sortie depuis ledit circuit de désaccentuation (560).

4. Appareil d'enregistrement et de reproduction magnétiques selon la revendication 3, dans lequel ledit circuit de désaccentuation (560) est un circuit de filtre passe-bande.

5. Appareil d'enregistrement et de reproduction magnétiques selon la revendication 4, dans lequel ledit circuit de filtre passe-bande est formé par une combinaison de condensateurs et d'inducteurs.

6. Appareil d'enregistrement et de reproduction magnétiques selon la revendication 4, dans lequel ledit circuit de filtre passe-bande est formé par une combinaison de circuits de retard et de soustracteurs.
